# FASCICULE DE BREVET EUROPEEN

(11) **EP 0 966 620 B1**
(45) Date de publication et mention de la délivrance du brevet: **29.05.2002**
(21) Numéro de dépôt: 98908173.2
(22) Date de dépôt: 12.02.1998
(51) Int. Cl.: F16D 55/02

(54) **SYSTEME DE FREINAGE MULTIDISQUE HYBRIDE**
HYBRIDES MEHRSCHEIBENBREMSSYSTEM
HYBRID MULTIPLE DISC BRAKE

(30) Priorité: 14.03.1997 FR 9703063
(43) Date de publication de la demande: 29.12.1999
(73) Titulaire: Bosch Systemes de Freinage, 93700 Drancy (FR)
(72) Inventeur: MERY, Jean-Claude, F-93320 Pavillons-sous-Bois (FR); BOISSEAU, Jean-Pierre, F-75014 Paris (FR); LAURENT, Jacques, F-93110 Rosny-sous-Bois (FR)
(86) Numéro de dépôt international: FR9800267
(87) Numéro de publication internationale: WO9841778

(56) Documents cités:
- FR-A- 2 314 399
- FR-A- 2 655 107

## Description

La présente invention concerne un dispositif de freinage multidisque pour un véhicule à moteur équipé d'au moins une roue tournant autour d'un axe transversal, suivant un sens de rotation direct correspondant à une marche avant du véhicule, ce dispositif comprenant :
- un stator fixé au véhicule au moyen d'au moins un bras de fixation;
- un rotor comprenant un premier disque et un second disque tournant avec la roue, espacés l'un de l'autre et fixes suivant l'axe transversal, le premier disque étant plus proche du bras de fixation que le second disque, et les premier et second disques présentant des faces internes respectives en vis-à-vis, et des faces externes respectives;
- des première et seconde paires de patins de friction coopérant respectivement avec les premier et second disques, chaque paire de patins comprenant un patin interne et un patin externe respectivement tournés vers les faces interne et externe du disque avec lequel cette paire de patins coopère;
- des moyens de serrage comprenant eux-mêmes : au moins un premier piston coulissant dans un premier cylindre, sous l'action d'une première pression hydraulique, pour appliquer le premier patin externe sur le premier disque; un étrier fixe, solidaire du stator et présentant une extrémité amont et une extrémité aval espacées l'une de l'autre suivant une direction tangentielle au rotor et se succédant dans cet ordre dans le sens de rotation direct, cet étrier fixe chevauchant le second disque et portant entre ses deux extrémités des seconds cylindres interne et externe dans lesquels coulissent respectivement, sous l'action d'une seconde pression hydraulique, des seconds pistons interne et externe respectivement propres à appliquer les seconds patins interne et externe sur le second disque;
- et des moyens de liaison pour rendre solidaires du stator les deux extrémités de l'étrier fixe.

Des dispositifs de freinage de ce type sont connus dans l'art antérieur, tel qu'illustré par exemple par le document de brevet FR - 2 314 399.

De façon générale, les freins à plusieurs disques sont surtout connus dans leur application aux poids lourds ou aux véhicules utilitaires.

Leur application aux véhicules légers ou de tourisme pose en revanche un problème aigu de compacité, auquel l'invention se propose d'apporter une solution nouvelle.

A cette fin, le dispositif de freinage de l'invention, par ailleurs conforme à la définition donnée dans le préambule ci-dessus, est essentiellement caractérisé en ce que les moyens de serrage comprennent en outre : un étrier coulissant présentant une extrémité amont et une extrémité aval espacées l'une de l'autre suivant une direction tangentielle au rotor et se succédant dans cet ordre dans le sens de rotation direct, cet étrier coulissant portant le premier cylindre entre ses deux extrémités, chevauchant le premier disque, et présentant un nez disposé entre les deux disques, le premier patin externe, le premier disque et le premier patin interne étant ainsi enserrés entre le premier piston et le nez de l'étrier coulissant; des moyens fixes de guidage amont et aval, solidaires du stator, et des moyens mobiles de guidage amont et aval, respectivement solidaires des extrémités amont et aval de l'étrier coulissant, les moyens mobiles de guidage amont et aval étant respectivement montés coulissants par rapport aux moyens fixes de guidage amont et aval pour assurer un coulissement de l'étrier coulissant par rapport au stator.

La compacité de ce dispositif peut encore être améliorée en prévoyant que le nez de l'étrier coulissant comprenne deux parties séparées par un espace libre, et que le second cylindre interne soit disposé dans cet espace libre.

Il est en outre avantageux de réaliser le rotor en au moins deux parties, dont l'une inclut le premier disque, et dont l'autre inclut le second disque, les deux disques pouvant ainsi notamment être constitués de matériaux différents.

Pour optimiser le fonctionnement de ce dispositif dans des conditions d'utilisation difficiles, il peut aussi être souhaitable que le rotor, conformé en moyeu entre les premier et second disques, soit percé d'orifices permettant une ventilation des faces internes des disques.

Bien que les axes de symétrie des premier et seconds cylindres puissent être confondus, il peut également être préférable que l'axe de symétrie du premier cylindre soit plus avancé, dans le sens de rotation direct, que les axes de symétrie des seconds cylindres.

Pour limiter la déformation maximale subie par ce dispositif de freinage sous contrainte, les premiers patins interne et externe peuvent être accrochés au stator par leurs extrémités amont respectives, c'est-à-dire par celles de leurs extrémités respectives qui sont en retrait dans le sens de rotation direct, tandis que ces patins s'appuient sur le stator par leurs extrémités aval respectives.

Pour réduire le nombre total de pièces nécessaires à la réalisation de ce dispositif, l'un au moins des moyens de liaison peut comprendre une vis formant colonnette, cette colonnette constituant l'un au moins des moyens de guidage amont et aval.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue perspective du dispositif de freinage réalisé selon les enseignements de la présente invention, vu depuis l'extérieur du véhicule, le sens de la flèche A correspondant au sens de rotation de la roue, conventionnellement appelé " sens direct ", pour une marche avant du véhicule.
- La figure 2 est une vue perspective du dispositif de freinage de la figure 1, vu depuis l'intérieur du véhicule.
- La figure 3 est une vue en coupe du dispositif de la présente invention selon la ligne III-III de la figure 1.
- la figure 4 est une vue de dessus du dispositif de l'invention, avec une coupe locale selon la ligne IV-IV de la figure 1.

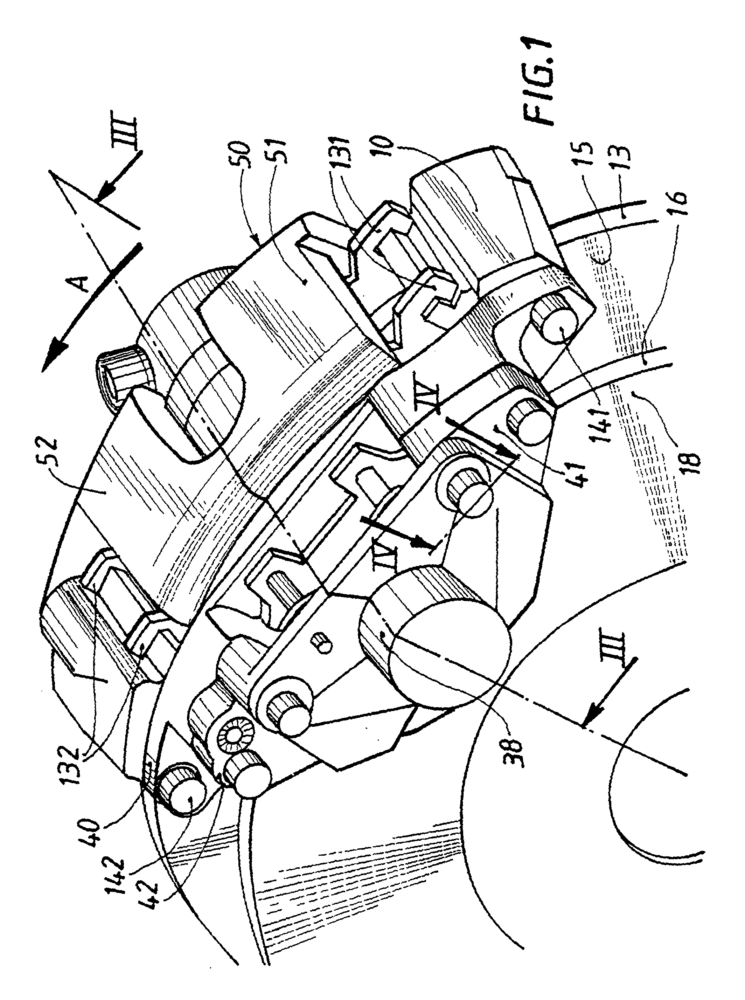

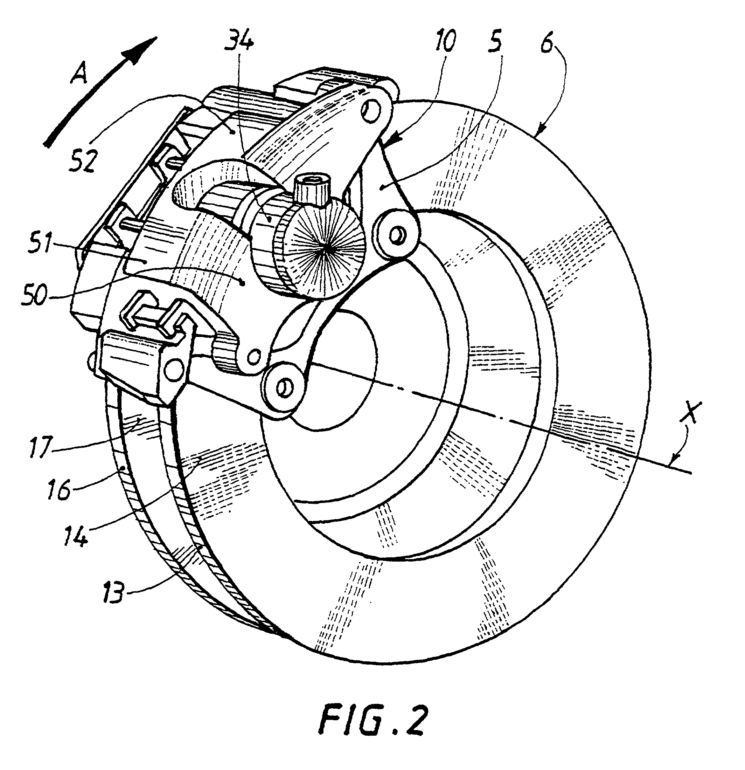

On a représenté sur les figures 1 et 2 un dispositif de freinage comportant un stator 10 fixé au véhicule par un bras de fixation 5 , faisant partie intégrante d'une partie fixe non représentée du véhicule, telle qu'un porte-fusée, ou étant rendue solidaire de cette partie fixe, par exemple par vissage.

Le bras de fixation 5 est tourné vers la face externe 14 d'un premier disque 13, qui fait partie d'un rotor 6 tournant avec la roue du véhicule.

Le rotor 6 comprend un second disque 16, les deux disques 13 et 16 étant espacés et fixes suivant l'axe transversal X de la roue et présentant deux faces internes en regard, respectivement 15 et 17 , la face externe 18 du second disque 16 étant donc tournée vers l'extérieur du véhicule.

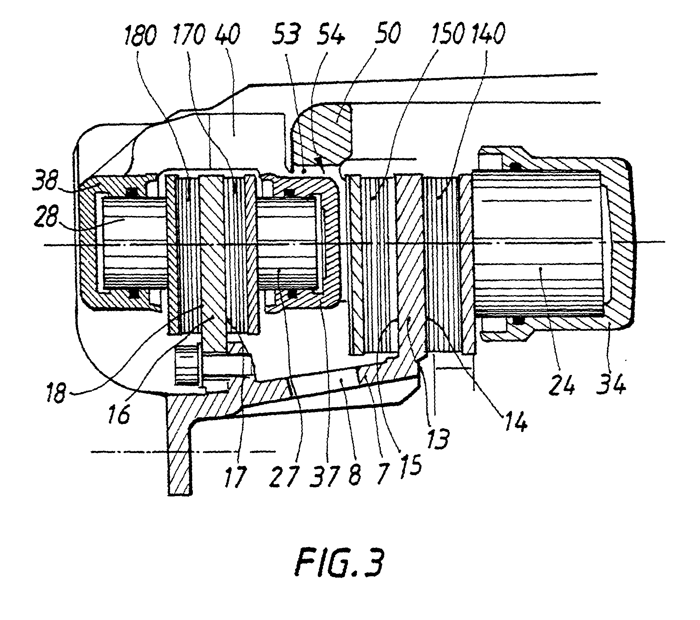

Comme on l'a représenté sur la figure 3 une première paire 140,150 et une seconde paire 170,180 de patins de friction peuvent être respectivement mises en contact avec les premier et second disques , chaque paire de patins comprenant un patin interne 150 ou 170 et un patin externe 140 ou 180 respectivement tournés vers les faces interne et externe du disque avec lequel a lieu le contact.

Des moyens de serrage sont prévus pour appliquer ces patins sur les disques, ces moyens de serrage comprenant un premier piston 24 coulissant dans un premier cylindre 34, sous l'action d'une première pression hydraulique, pour appliquer le premier patin externe 140 sur la face externe 14 du premier disque 13 , et des seconds pistons interne 27 et externe 28 coulissant dans des seconds cylindres interne 37 et externe 38 sous l'action d'une seconde pression hydraulique, pour appliquer les seconds patins interne 170 et externe 180 sur les faces interne 17 et externe 18 du second disque 16.

Les seconds cylindres interne 37 et externe 38 sont portés par un étrier fixe 40, solidaire du stator 10, et chevauchant le second disque 16.

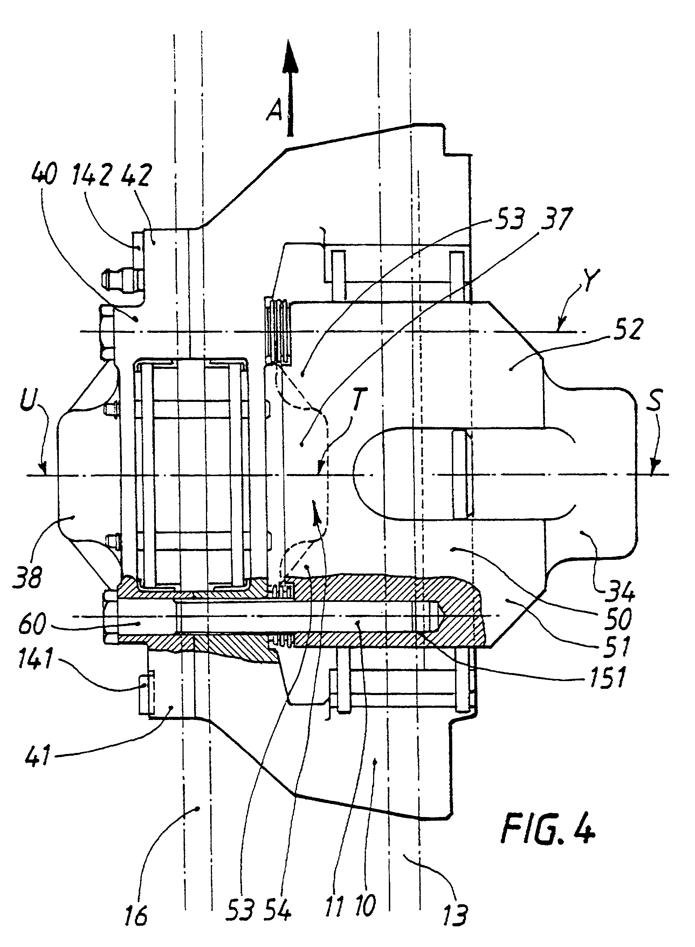

Comme représenté sur les figures 1 et 4 , l'étrier fixe 40 présente par ailleurs une extrémité amont 41 et une extrémité aval 42 , espacées l'une de l'autre suivant une direction tangentielle au rotor 6 , se succédant dans cet ordre dans le sens de rotation de la roue indiqué par la flèche A et correspondant à la marche avant du véhicule, et qui sont respectivement solidarisées au stator 10 par des moyens de liaison par exemple constitués de vis de fixation 141 et 142.

Conformément à la présente invention, les moyens de serrage comprennent en outre un étrier coulissant 50 chevauchant le premier disque 13 et comportant entre ses extrémités amont 51 et aval 52 un premier cylindre 34, et un nez 53 disposé entre les deux disques 13 et 16, les extrémités amont 51 et aval 52, de cet étrier coulissant étant espacées l'une de l'autre suivant une direction tangentielle au rotor 6, et se succédant dans cet ordre dans le sens de rotation de la roue en marche avant.

De cette façon, le premier patin externe 140, le premier patin interne 150, et le premier disque 13 sont enserrés entre le premier piston 24 et le nez 53 de l'étrier.

Dans l'exemple de réalisation représenté sur les figures, le stator 10 présente des moyens fixes de guidage amont 11, consistant par exemple en une colonnette cylindrique, tandis que l' extrémité amont 51 de l'étrier coulissant 50 présentent des moyens mobiles de guidage amont 151, consistant par exemple en un logement cylindrique recevant la colonnette, les moyens mobiles étant ainsi respectivement montés coulissants par rapport aux moyens fixes et permettant d' assurer un coulissement de l'étrier coulissant 50 par rapport au stator 10.

L'homme de l'art n'aura aucun mal à imaginer que des moyens similaires peuvent évidemment être retenus en ce qui concerne les moyens de guidage aval par exemple au niveau de l'axe Y.

De plus, la compacité de ce dispositif peut encore être améliorée en prévoyant que le nez 53 de l'étrier coulissant 50 comprenne deux parties séparées par un espace libre 54 et que le second cylindre interne 37 soit disposé dans cet espace libre.( figure 4 )

Il est avantageux de réaliser le rotor 6 en au moins deux parties dont l'une inclut le premier disque 13, et dont l'autre inclut le second disque 16, ce qui permet par exemple d'utiliser des disques constitués de matériaux différents, l'un des disques pouvant par exemple être réalisé en fonte et l'autre en carbone.

En outre, pour optimiser le fonctionnement de ce dispositif dans des conditions d'utilisation difficiles, il peut être aussi souhaitable que le rotor 6 , conformé en moyeu 7 entre les premier et second disques 13 et 16, soit percé d'orifices 8 permettant une ventilation des faces internes 15 et 17 des disques.

Selon un mode de réalisation préféré, les axes de symétrie des premier et seconds cylindres 34 37 et 38 peuvent être confondus, mais il peut également être préférable que l'axe de symétrie S du premier cylindre 34 soit plus avancé, dans le sens de rotation direct indiqué par la flèche A, que les axes de symétrie T et U des seconds cylindres 37 et 38.

Il est avantageux que les premiers patins interne 150 et externe 140 soient accrochés au stator 10 par leurs extrémités amont respectives 131, c'est à dire par celles de leurs extrémités respectives qui sont en retrait dans le sens de rotation de la flèche A, tandis que ces patins s'appuient sur le stator par leurs extrémités aval respectives 132, cette disposition permettant ainsi de limiter la déformation maximale subie par ce dispositif de freinage sous contrainte.

Enfin, il est avantageux de réduire le nombre total de pièces nécessaires à la réalisation de ce dispositif, en prévoyant, comme illustré sur la figure 4, que l'un au moins des moyens de liaison puisse comprendre une vis 60 formant colonnette, cette colonnette constituant l'un au moins des moyens de guidage amont 11 et aval de l'étrier coulissant.

On a donc bien réalisé un dispositif de freinage multidisque, permettant d'assurer une bonne compacité grâce à l'imbrication d'un dispositif à étrier fixe 40 dans un dispositif à étrier coulissant 50 , dans lequel la déformation sous contrainte est réduite à une valeur minimale, l'étrier fixe 40 participant à la rigidité du stator 10, support d'étrier coulissant.

Bien entendu, l'invention n'est pas limitée au mode de réalisation qui a été décrit, mais elle est susceptible au contraire de recevoir de nombreux aménagements qui apparaîtront à l'homme du métier et qui rentrent dans le cadre des revendications annexées. C'est ainsi par exemple que le stator 10 pourrait être réalisé monobloc avec l'élément de l'étrier fixe support du cylindre 37 tel que décrit sur la figure 4.

## Revendications

1. Dispositif de freinage multidisque pour un véhicule à moteur équipé d'au moins une roue tournant autour d'un axe transversal (X), suivant un sens de rotation direct correspondant à une marche avant du véhicule, ce dispositif comprenant :
- un stator (10) fixé au véhicule au moyen d'au moins un bras de fixation (5);
- un rotor (6) comprenant un premier disque (13) et un second disque (16) tournant avec la roue, espacés l'un de l'autre et fixes suivant l'axe transversal (X), le premier disque étant plus proche du bras de fixation que le second disque, et les premier et second disques présentant des faces internes respectives en vis-à-vis (15) et (17), et des faces externes respectives (14) et (18);
- des première (140) et (150) et seconde (170) et (180) paires de patins de friction coopérant respectivement avec les premier et second disques, chaque paire de patins comprenant un patin interne (150) ou (170) et un patin externe (140) ou (180) respectivement tournés vers les faces interne et externe du disque avec lequel cette paire de patins coopère;
- des moyens de serrage comprenant eux-mêmes : au moins un premier piston (24) coulissant dans un premier cylindre (34), sous l'action d'une première pression hydraulique, pour appliquer le premier patin externe (140) sur le premier disque (13); un étrier fixe (40), solidaire du stator (10) et présentant une extrémité amont (41) et une extrémité aval (42) espacées l'une de l'autre suivant une direction tangentielle au rotor et se succédant dans cet ordre dans le sens de rotation direct, cet étrier fixe chevauchant le second disque (16) et portant entre ses deux extrémités des seconds cylindres interne (37) et externe (38) dans lesquels coulissent respectivement, sous l'action d'une seconde pression hydraulique, des seconds pistons interne (27) et externe (28) respectivement propres à appliquer les seconds patins interne (170) et externe (180) sur le second disque (16);
- et des moyens de liaison pour rendre solidaires du stator les deux extrémités (41) et (42) de l'étrier fixe;
**caractérisé en ce que** les moyens de serrage comprennent en outre : un étrier coulissant (50) présentant une extrémité amont (51) et une extrémité aval (52) espacées l'une de l'autre suivant une direction tangentielle au rotor et se succédant dans cet ordre dans le sens de rotation direct, cet étrier coulissant portant le premier cylindre (34) entre ses deux extrémités (51) et (52), chevauchant le premier disque, et présentant un nez (53) disposé entre les deux disques, le premier patin externe (140), le premier disque (13) et le premier patin interne (150) étant ainsi enserrés entre le premier piston et le nez de l'étrier coulissant; des moyens fixes de guidage amont (11) et aval, solidaires du stator, et des moyens mobiles de guidage amont (151) et aval, respectivement solidaires des extrémités amont et aval de l'étrier coulissant, les moyens mobiles de guidage amont et aval étant respectivement montés coulissants par rapport aux moyens fixes de guidage amont et aval pour assurer un coulissement de l'étrier coulissant par rapport au stator.

2. Dispositif de freinage suivant la revendication 1, **caractérisé en ce que** le nez (53) de l'étrier coulissant comprend deux parties (51) et (52) séparées par un espace libre (54), et **en ce que** le second cylindre interne (37) est disposé dans cet espace libre.

3. Dispositif de freinage suivant la revendication 1 ou 2, **caractérisé en ce que** le rotor (6) comprend au moins deux parties, dont l'une inclut le premier disque (13), et dont l'autre inclut le second disque (16).

4. Dispositif de freinage suivant l'une quelconque des revendications précédentes, **caractérisé en ce que** le rotor est, entre les premier et second disques, conformé en moyeu (7), et **en ce que** ce moyeu est percé d'orifices (8) permettant une ventilation des faces internes (15) et (17) des disques.

5. Dispositif de freinage suivant l'une quelconque des revendications précédentes, dans lequel chaque cylindre présente un axe de symétrie correspondant, **caractérisé en ce que** l'axe de symétrie (S) du premier cylindre est plus avancé, dans le sens de rotation direct, que les axes de symétrie (T) et (U) des seconds cylindres.

6. Dispositif de freinage suivant l'une quelconque des revendications précédentes, dans lequel les premiers patins interne (150) et externe (140) présentent chacun une extrémité amont (131) et une extrémité aval (132) respectivement tournées vers les extrémités amont et aval de l'étrier coulissant, **caractérisé en ce que** ces premiers patins interne et externe sont accrochés au stator par leurs extrémités amont respectives (131).

7. Dispositif de freinage suivant la revendication 6, **caractérisé en ce que** les premiers patins interne (150) et externe (140) sont en appui sur le stator (10) par leurs extrémités aval respectives (132).

8. Dispositif de freinage suivant l'une quelconque des revendications précédentes, **caractérisé en ce que** l'un au moins des moyens de liaison comprend une vis (60) formant colonnette, et **en ce que** cette colonnette constitue l'un au moins des moyens de guidage amont (11) et aval.

## Patentansprüche

1. Mehrscheibenbremsvorrichtung für ein Kraftfahrzeug, das mindestens mit einem um eine Querachse (X), entlang einer direkten, einer Vorwärtsfahrt des Fahrzeugs entsprechenden Drehrichtung drehenden Rad ausgestattet ist, wobei die Vorrichtung folgendes umfaßt:
- einen am Fahrzeug mittels mindestens eines Befestigungsarms (5) befestigten Stator (10);
- einen Rotor (6) mit einer ersten Scheibe (13) und einer zweiten Scheibe (16), die sich mit dem Rad drehen, voneinander beabstandet sind und entlang der Achse (X) fest sind, wobei die erste Scheibe näher am Befestigungsarm liegt als die zweite Scheibe und die erste und zweite Scheibe einander gegenüberliegende Innenseiten (15) bzw. (17) sowie Außenseiten (14) bzw. (18) aufweisen;
- ein erstes Reibbelagpaar(140) und (150) und ein zweites Reibbelagpaar (170) und (180), welche jeweils mit der ersten bzw. zweiten Scheibe zusammenwirken, wobei jedes Belagpaar einen Innenbelag (150) bzw. (170) und einen Außenbelag (140) bzw. (180) aufweist, die jeweils der Innenseite bzw. der Außenseite der Scheibe zugewandt sind, mit welcher dieses Belagpaar zusammenwirkt;
- Spannmittel, die wiederum umfassen: mindestens einen ersten Kolben (24), der in einem ersten Zylinder (34) unter der Wirkung eines ersten hydraulischen Drucks verschiebbar ist, um den ersten Außenbelag (140) an die erste Scheibe (13) anzulegen; einen feststehenden Bremssattel (40), der mit dem Stator (10) fest verbunden ist und ein vorderes Ende (41) und ein hinteres Ende (42) aufweist, die entlang einer zum Rotor tangentialen Richtung voneinander beabstandet sind und in dieser Reihenfolge in der direkten Drehrichtung aufeinanderfolgen, wobei der feststehende Bremssattel die zweite Scheibe (16) umgreift und zwischen seinen beiden Enden einen zweiten Innenzylinder (37) und einen zweiten Außenzylinder (38) trägt, in welchen unter der Wirkung eines zweiten hydraulischen Drucks ein zweiter Innenkolben (27) bzw. einen zweiten Außenkolben (28) verschiebbar sind, die jeweils in der Lage sind, den zweiten Innenbelag (170) und den zweiten Außenbelag (180) an die zweite Scheibe (16) anzulegen,
- und Verbindungsmittel, um die beiden Enden (41) und (42) des feststehenden Bremssattels mit dem Stator fest zu verbinden;
**dadurch gekennzeichnet, daß** die Spannmittel zudem umfassen: einen verschiebbaren Bremssattel (50), der ein vorderes Ende (51) und ein hinteres Ende (52) aufweist, die entlang einer zum Rotor tangentialen Richtung voneinander beabstandet sind und in dieser Reihenfolge in der direkten Drehrichtung aufeinanderfolgen, wobei dieser verschiebbare Bremssattel zwischen seinen beiden Enden (51) und (52) den ersten Zylinder (34) trägt, die erste Scheibe umgreift und eine Nase (53) aufweist, die zwischen den beiden Scheiben angeordnet ist, wobei der erste Außenbelag (140), die erste Scheibe (13) und der erste Innenbelag (150) somit zwischen dem ersten Kolben und der Nase des verschiebbaren Bremssattels eingespannt sind; sowie feststehende vordere Führungsmittel (11) und hintere Führungsmittel, die mit dem Stator fest verbunden sind, und bewegliche vordere Führungsmittel (151) und hintere Führungsmittel, die jeweils mit dem vorderen Ende bzw. dem hinteren Ende des verschiebbaren Bremssattels fest verbunden sind, wobei die beweglichen vorderen bzw. hinteren Führungsmittel jeweils verschiebbar zu den feststehenden vorderen bzw. hinteren Führungsmitteln angebracht sind, um das Verschieben des verschiebbaren Bremssattels zum Stator zu gewährleisten.

2. Bremsvorrichtung nach Anspruch 1, **dadurch gekennzeichnet, daß** die Nase (53) des verschiebbaren Bremssattels zwei durch einen Freiraum (54) voneinander getrennten Teile (51) und (52) umfaßt und daß der zweite Innenzylinder (37) in diesem Freiraum angeordnet ist.

3. Bremsvorrichtung nach Anspruch 1 oder 2, **dadurch gekennzeichnet, daß** der Rotor (6) mindestens zwei Teile aufweist, wobei der eine Teil die erste Scheibe (13) und der zweite Teil die zweite Scheibe (16) umfaßt.

4. Bremsvorrichtung nach einem der vorhergehenden Ansprüche, **dadurch gekennzeichnet, daß** der Rotor zwischen der ersten Scheibe und der zweiten Scheibe als Nabe (7) ausgebildet ist und daß diese Nabe mit Öffnungen (8) versehen ist, die eine Lüftung der Innenseiten (15) und (17) der Scheiben ermöglichen.

5. Bremsvorrichtung nach einem der vorhergehenden Ansprüche, in welcher jeder Zylinder eine entsprechende Symmetrieachse aufweist, **dadurch gekennzeichnet, daß** die Symmetrieachse (S) des ersten Zylinders in der direkten Drehrichtung weiter vorne liegt als die Symmetrieachsen (T) und (U) der zweiten Zylinder.

6. Bremsvorrichtung nach einem der vorhergehenden Ansprüche, in welcher der erste Innenbelag (150) und der erste Außenbelag (140) jeweils ein vorderes Ende (131) bzw. ein hinteres Ende (132) aufweisen, die jeweils dem vorderen Ende bzw. dem hinteren Ende des verschiebbaren Bremssattels zugewandt sind, **dadurch gekennzeichnet, daß** der erste Innenbelag und der erste Außenbelag jeweils mit ihrem vorderen Ende (131) am Stator angehängt sind.

7. Bremsvorrichtung nach Anspruch 6, **dadurch gekennzeichnet, daß** der erste Innenbelag (150) und der erste Außenbelag (140) jeweils mit ihrem hinteren Ende (132) am Stator anliegen.

8. Bremsvorrichtung nach einem der vorhergehenden Ansprüche, **dadurch gekennzeichnet, daß** mindestens eines der Verbindungsmittel eine Schraube (60) aufweist, die eine Stange bildet, und daß diese Stange mindestens eines der vorderen Führungsmittel (11) und hinteren Führungsmittel bildet.

## Claims

1. Multi-disc braking device for a motor vehicle equipped with at least one wheel rotating about a transverse axis (X) in a direct rotation direction which corresponds to forward travel of the vehicle, this device comprising:
- a stator (10) fixed to the vehicle by means of at least one fixing arm (5);
- a rotor (6) comprising a first disc (13) and a second disc (16) which rotate with the wheel and are spaced apart and fixed along the transverse axis (X), the first disc being closer to the fixing arm than the second disc, and the first and second discs having internal faces (15) and (17) respectively which face each other, and external faces (14) and (18) respectively;
- a first pair (140) and (150) and a second pair (170) and (180) of friction pads interacting respectively with the first disc and with the second disc, each pair of pads comprising an internal pad (150) or (170) and an external pad (140) or (180) respectively pointing towards the internal and external faces of the disc with which this pair of pads interacts;
- brake-application means themselves comprising: at least one first piston (24) sliding in a first cylinder (34) under the action of a first hydraulic pressure to apply the first external pad (140) against the first disc (13); a fixed caliper (40) secured to the stator (10) and having an upstream end (41) and a downstream end (42) which are spaced apart in a direction tangential to the rotor and follow one after the other in this order in the direct rotation direction, this fixed caliper straddling the second disc (16) and between its two ends carrying a second internal cylinder (37) and a second external cylinder (38) in which there slide respectively, under the action of a second hydraulic pressure, a second internal piston (27) and a second external piston (28) which are respectively capable of applying the second internal pad (170) and second external pad (180) against the second disc (16);
- and connecting means for securing the two ends (41) and (42) of the fixed caliper to the stator;
**characterized in that** the brake-application means further comprise: a sliding caliper (50) having an upstream end (51) and a downstream end (52) which are spaced apart in a direction tangential to the rotor and follow one after the other in this order in the direct rotation direction, this sliding caliper carrying the first cylinder (34) between its two ends (51) and (52), straddling the first disc and having a tip (53) arranged between the two discs, the first external pad (140), the first disc (13) and the first internal pad (150) thus being clamped between the first piston and the tip of the sliding caliper; fixed upstream (11) and downstream guiding means secured to the stator, and moving upstream (151) and downstream guiding means respectively secured to the upstream and downstream ends of the sliding caliper, the moving upstream and downstream guiding means being mounted respectively so that they can slide with respect to the fixed upstream and downstream guiding means in order to allow the sliding caliper to slide with respect to the stator.

2. Braking device according to Claim 1, **characterized in that** the tip (53) of the sliding caliper comprises two parts (51) and (52) separated by an empty space (54), and **in that** the second internal cylinder (37) is arranged in this empty space.

3. Braking device according to Claim 1 or 2, **characterized in that** the rotor (6) comprises at least two parts, one of which includes the first disc (13), and the other of which includes the second disc (16).

4. Braking device according to any one of the preceding claims, **characterized in that** between the first and second discs the rotor is shaped like a hub (7), and **in that** this hub is pierced with holes (8) for ventilating the internal faces (15) and (17) of the discs.

5. Braking device according to any one of the preceding claims, in which each cylinder has a corresponding axis of symmetry, **characterized in that** the axis of symmetry (S) of the first cylinder is further forward, in the direct rotation direction, than the axes of symmetry (T) and (U) of the second cylinders.

6. Braking device according to any one of the preceding claims, in which the first internal pad (150) and the first external pad (140) each have an upstream end (131) and a downstream end (132) which point respectively towards the upstream end and the downstream end of the sliding caliper, **characterized in that** this first internal pad and this first external pad are attached to the stator by their respective upstream ends (131).

7. Braking device according to Claim 6, **characterized in that** the first internal pad (150) and first external pad (140) rest against the stator (10) via their respective downstream ends (132).

8. Braking device according to any one of the preceding claims, **characterized in that** at least one of the connecting means comprises a screw (60) forming a guide pin, and **in that** this guide pin constitutes at least one of the upstream (11) and downstream guiding means.
